# EUROPÄISCHE PATENTANMELDUNG

(11) **EP 0 637 569 A1**
(43) Veröffentlichungstag der Anmeldung: **08.02.1995**
(21) Anmeldenummer: 94111702.0
(22) Anmeldetag: 27.07.1994
(51) Int. Cl.: C02F 9/00, E21B 43/38, B09C 1/00, E03B 3/15

(54) **Verfahren und Einrichtung zur Beeinflussung von im Erdreich befindlichen Flüssigkeiten**

(30) Priorität: 02.08.1993 DE 4325919
(71) Anmelder: IEG Industrie-Engineering GmbH, D-72770 Reutlingen (DE)
(72) Erfinder: Bernhardt, Bruno, D-72764 Reutlingen (DE)
(74) Vertreter: Möbus, Rudolf, Dipl.-Ing.

(57) **Zusammenfassung**

Bei dem Verfahren und der Einrichtung zur Beeinflussung von im Erdreich (11) befindlichen Flüssigkeiten werden im Einflußbereich eines Schachtes (10), in welchem ein Grundwasserkreislauf (20) durch das Erdreich (11) verursacht wird, mittels Hilfsbohrschächten (22) Flüssigkeitshilfskreisläufe (27) erzeugt, um eine Vermischung von Flüssigkeitsphasen unterschiedlicher spezifischer Gewichte für ihren Transport in den Hauptschacht (10) zu erreichen.

## Beschreibung

Die Erfindung betrifft ein Verfahren zur Beeinflussung von im Erdreich befindlichen Flüssigkeiten durch Bildung eines Flüssigkeitskreislaufes in dem Erdreich mittels einer Pumpe, die in einem in das Erdreich bis in den interessierenden Flüssigkeitsbereich eingebrachten Schacht in einem Verbindungskanal zwischen zwei voneinander getrennten, jeweils flüssigkeitsdurchlässige Wandungen aufweisenden Schachtabschnitten angeordnet ist.

Es ist bereits bekannt, in verseuchtem Erdreich einen Flüssigkeitskreislauf über einen Schacht zu erzeugen und in diesem Schacht eine Reinigungseinrichtung für die durchströmende Flüssigkeit anzuordnen oder aus dem Schacht einen Teilstrom der Flüssigkeit abzuzweigen und über eine außerhalb des Schachtes befindliche Reinigungseinrichtung und wieder zurück in das Erdreich zu leiten (z. B. DE-OS 42 04 991). Es ist auch bereits vorgeschlagen worden, in dem Bereich des Flüssigkeitskreislaufes im Erdreich mechanische Schwingungen begrenzter Energie zu erzeugen, um in den Kapillaren von Bodenschichten molekulare Flüssigkeitsbewegungen auszulösen (DE-PS 39 40 433). Es hat sich aber gezeigt, daß diese Maßnahmen nicht in jedem Fall von Bodenverunreinigungen ausreichen, die Schadstoffe zu beseitigen. Dies gilt insbesondere für Fälle, wo in einem grundwasserdurchströmten oder grundwassergesättigtem Bodenbereich schwere Flüssigkeitsphasen als Verunreinigung enthalten sind, beispielsweise Schweröle, die sich am unteren Rand des zu reinigenden Bodenbereiches absetzen. Probleme entstehen auch, wenn besonders leichte Flüssigkeitsphasen zu erfassen sind, die sich im Bereich des Grundwasserspiegels oder in der sich daran anschließenden, nur teilweise mit Grundwasser gesättigten Kapillarschicht ansammeln. Es ist schwierig, diese abgelagerten Flüssigkeitsphasen mit dem erzeugten und über den Schacht geführten Flüssigkeitskreislauf zu erfassen.

Der Erfindung liegt die Aufgabe zugrunde, ein Verfahren und eine Einrichtung zu schaffen, mit welcher es gelingt, auch in Randbezirken angesammelte Flüssigkeitsphasen, insbesondere schwere Flüssigkeitsphasen, in den im Grundwasser erzeugten Reinigungskreislauf einzubeziehen.

Die gestellte Aufgabe wird mit dem eingangs genannten Verfahren erfindungsgemäß dadurch gelöst, daß mittels im Flüssigkeitseinzugsbereich des Schachtes niedergebrachter, ebenfalls eine Flüssigkeitsantriebsvorrichtung aufweisender Hilfsbohrschächte Flüssigkeits-Hilfskreisläufe zur Vermischung von Flüssigkeitsphasen unterschiedlicher spezifischer Gewichte geschaffen werden.

Mit Hilfe der Flüssigkeits-Hilfskreisläufe ist es insbesondere möglich, am unteren Rand einer zu reinigenden Grundwasserschicht abgelagerte schwere Flüssigkeitsphasen, wie Schweröle, so weit hochzufördern, daß sie von dem über den Schacht führenden Flüssigkeitskreislauf erfaßt und mit in den Schacht eingezogen werden. Vorteilhafterweise können dabei mittels der Flüssigkeitsantriebsvorrichtungen in den Hilfsbohrschächten Antriebsimpulse auf die Flüssigkeit ausgeübt werden, deren Impulsfrequenz an die Durchlässigkeit des Erdreiches angepaßt ist. Es hat sich gezeigt, daß für das Hindurchbewegen einer Flüssigkeit durch das ein Korngerüst bildende Erdreich und damit die Bildung eines wirksamen Flüssigkeits-Hilfskreislaufes keinesfalls eine starke Druckbildung entscheidend und förderlich ist, sondern daß hier eine an die Durchlässigkeit des Erdreiches angepaßte Impulsfrequenz entscheidend ist.

Das Verfahren gemäß der Erfindung läßt sich mit einer Einrichtung durchführen, die neben einem bereits für die Bodensanierung bekannten und bis in den interessierenden Flüssigkeitsbereich eingebrachten Schacht mit zwei voneinander durch eine Wandung getrennten Schachtabschnitten, deren durchlässige Wandungsbereiche in Achsrichtung des Schachtes voneinander entfernt sind und bei welchem in einem Verbindungskanal zwischen den beiden Schachtabschnitten eine Förderpumpe angeordnet ist, erfindungsgemäß dem Schacht benachbarte Hilfsbohrschächte aufweist, die ebenfalls in ihrer Achsrichtung voneinander entfernte durchlässige Wandungsbereiche aufweisen, zwischen denen jeweils im Hilfsschacht eine in einer Achsrichtung des Hilfsschachtes wirksame Flüssigkeitsantriebsvorrichtung angeordnet ist, insbesondere eine Impulsantriebsvorrichtung. Im Schacht selbst kann in ebenfalls bekannter Weise eine Reinigungseinrichtung, beispielsweise eine Filtereinrichtung oder eine Gasbehandlungseinrichtung, angeordnet sein. Es kann aber auch ein Teilstrom des gebildeten Flüssigkeitskreislaufes aus dem Schacht in eine außerhalb des Schachtes befindliche Reinigungsvorrichtung abgeleitet und anschließend in das Erdreich zurückbefördert werden.

Zweckmäßig kann jeder Hilfsschacht als Hubzylinder für einen zwischen den durchlässigen Wandungsbereichen angeordneten Stoßkolben angebildet sein und mit einer Einrichtung zur Einstellung der Stoßfrequenz des Stoßkolbens versehen sein. Zur Beeinflussung von abgesunkenen schweren Flüssigkeitsphasen kann die Förderrichtung der in den Hilfsschächten angeordneten Flüssigkeitsantriebsvorrichtungen nach unten gerichtet sein, um einen Flüssigkeitskreislauf zu erzeugen, der im Erdreich von unten nach oben in den Hilfsschacht zurückführt.

Nachfolgend wird ein Ausführungsbeispiel einer Einrichtung gemäß der Erfindung mit zwei unterschiedlich gestalteten Hauptschächten anhand der beiliegenden Zeichnungen näher erläutert.

Im einzelnen zeigen:
- Fig. 1: einen schematischen Teilquerschnitt durch einen zu reinigenden Bodenbereich mit einem von mehreren, einen Hauptschacht umgebenden Hilfsschächten;
- Fig. 2: einen schematischen Querschnitt durch eine besondere Ausführungsform des Hauptschachtes der Einrichtung.

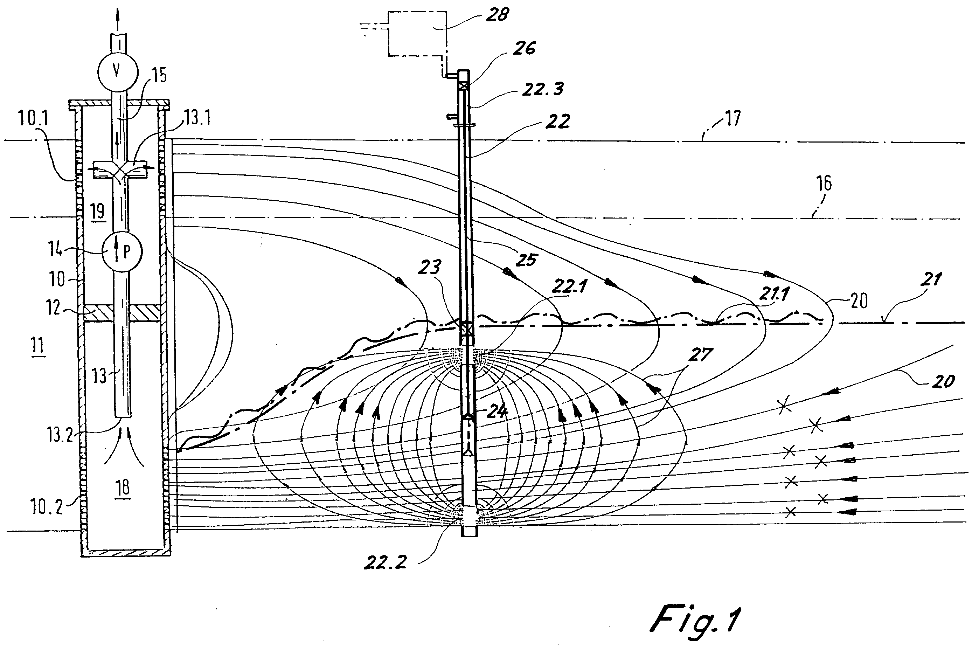

Fig. 1 zeigt einen in verunreinigtes Erdreich 11 eingebrachten und mit einem Brunnenrohr 10 ausgekleideten Schacht. Das Brunnenrohr weist einen oberen durchlässigen Wandungsabschnitt 10.1 und mit Abstand davon einen unteren durchlässigen Wandungsabschnitt 10.2 auf. Zwischen den beiden durchlässigen Wandungsabschnitten 10.1, 10.2 ist in das Brunnenrohr eine Querwandung 12 dicht eingesetzt, die eine zentrale Durchgangsöffnung für einen rohrförmigen Durchgangskanal 13 aufweist. In dem Durchgangskanal 13 ist eine vorzugsweise elektrisch betriebene Förderpumpe 14 angeordnet. Der Durchgangskanal 13 weist auf der Höhe des oberen durchlässigen Wandungsabschnittes 10.1 seitliche Ausströmöffnungen 13.1 und an seinem unteren Ende eine Einströmöffnung 13.2 auf. Nach oben ist der Durchgangskanal 13 zu einer Teilstrom-Förderleitung 15 verlängert, die nach außen zu einer nicht dargestellten Reinigungseinrichtung oder anderen Behandlungseinrichtung für die Flüssigkeit führt.

Durch die Förderpumpe 14 wird in dem Erdreich 11 eine Grundwasserströmung erreicht, deren Strömungsbild mit Potentiallinien 20 dargestellt ist. Durch den durchlässigen Wandungsabschnitt 10.2 in den unteren Bereich 18 des Brunnenrohres 10 eingeflossenes Grundwasser wird durch die Förderpumpe 14 in den Durchgangskanal 13 hochgesaugt und zum größten Teil über die Ausströmöffnungen 13.1 oberhalb des normalen Grundwasserspiegels 16 in den oberen Bereich 19 des Brunnenrohres gefördert, von wo aus das Grundwasser über den oberen durchlässigen Wandungsabschnitt 10.1 in das Erdreich 11 zurückströmt.

Im vorliegenden Falle hat sich in dem zu reinigenden Bodenbereich Schweröl bis zu einem Ruhepegel 21 abgelagert, welches das normalerweise im Bereich des unteren durchlässigen Wandungsabschnittes 10.2 sehr lebhafte Rückströmungsprofil eines erzeugten Grundwasser-Kreislaufes erheblich stört. Dies ist in Fig. 1 durch das Auskreuzen der unteren Strömungspotentiallinien 20 angedeutet. Um das den Hauptschacht begrenzende Brunnenrohr 10 sind mit Abstand mehrere Hilfsbohrschächte 22 niedergebracht, von denen in Fig. 1 nur einer dargestellt ist. Auch diese Hilfsbohrschächte sind mit einem Rohr ausgekleidet, das in seinem unteren Endbereich einen unteren durchlässigen Wandungsabschnitt 22.2 und mit Abstand darüber einen hier noch unterhalb des Schweröl-Ruhespiegels 21 befindlichen oberen durchlässigen Wandungsabschnitt 22.1 aufweist. Oberhalb des oberen durchlässigen Wandungsabschnittes 22.1 ist der Hilfsschacht 22 mittels einer Dichtung 23 verschlossen.

Zwischen dem oberen durchlässigen Wandungsabschnitt 22.1 und dem unteren durchlässigen Wandungsabschnitt 22.2 des Hilfsschachtes 22 ist eine Flüssigkeitsantriebsvorrichtung angeordnet. Sie kann wie beim Hauptschacht aus einer Förderpumpe bestehen. Im vorliegenden Falle besteht sie aus einem Stoßkolben 24, der über eine durch die Dichtung 23 bis in den oberen Abschnitt 22.3 des Hilfsschachtes geführte Kolbenstange 25 mit einem Antriebskolben 26 verbunden ist. Der obere Endbereich 22.3 des Hilfsschachtrohres ist als Hubzylinder für den beidseitig beaufschlagbaren Antriebskolben 26 ausgebildet. Der Antriebskolben 26 kann pneumatisch oder hydraulisch betätigt werden und dient zur Erzeugung von nach unten gerichteten Stoßimpulsen mittels des Stoßkolbens 24, durch welche innerhalb der Schwerölablagerung ein Flüssigkeits-Hilfskreislauf erzeugt wird, der durch das Erdreich von dem unteren durchlässigen Wandungsabschnitt 22.2 zu dem oberen durchlässigen Wandungsabschnitt 22.1 des Hilfsschachtes 22 führt und durch Strömungslinien 27 dargestellt ist. Mit diesem Flüssigkeits-Hilfskreislauf wird das Schweröl nach oben in den durch das Schweröl weniger beeinflußten und entsprechend lebhaften Strömungsbereich des über das Brunnenrohr 10 führenden Grundwasserkreislaufes hineinbewegt und dadurch verstärkt in das Brunnenrohr 10 abgesaugt. Durch die Stoßimpulse des Stoßkolbens 24, deren Frequenz über eine schematisch angedeutete Steuereinrichtung 28 in Anpassung an die Dichte des Erdreiches 11 einstellbar ist, wird neben der Erzeugung eines Flüssigkeits-Hilfskreislaufes das abgelagerte Schweröl auch in Schwingungen versetzt. Dadurch gelangt auch der Ölspiegel in Schwingungen, was durch eine strichpunktierte Linie 21.1 in Fig. 1 angedeutet ist und wodurch die Mitnahme des Schweröles durch den Grundwasserkreislauf zusätzlich begünstigt wird.

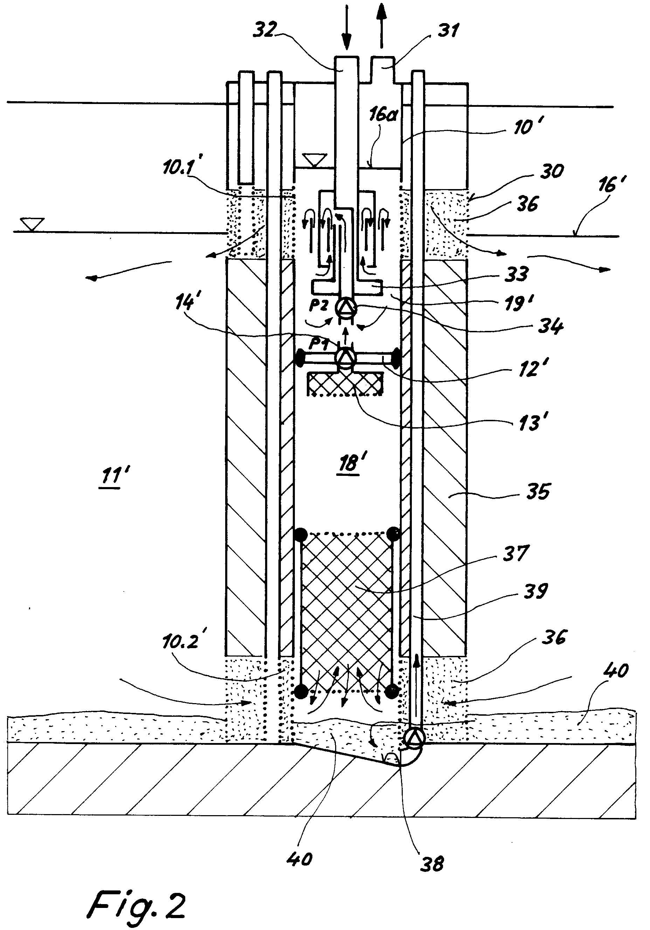

Fig. 2 zeigt einen schematischen Querschnitt durch eine andere Ausführungsform eines Hauptschachtes 30. In dem Schacht 30 ist mit Abstand von der Schachtwandung ein Brunnenrohr 10' mit einem oberen durchlässigen Wandungsabschnitt 10.1' und einem unteren durchlässigen Wandungsabschnitt 10.2' angeordnet. Zwischen den beiden Wandungsabschnitten 10.1' und 10.2' ist das Brunnenrohr 10' durch eine Querwandung 12' wiederum in einen unteren Brunnenrohrbereich 18' und in einen oberen Brunnenrohrbereich 19' unterteilt, und die Trennwandung 12' ist durch einen Kanal 13' überbrückt, in welchem eine Flüssigkeitsförderpumpe 14' angeordnet ist.

In dem oberen Brunnenrohrbereich 19' ist eine Reinigungseinrichtung in Form einer Unterdruck-Belüftungseinrichtung angeordnet. Über einen Anschlußstutzen 31 ist der obere Brunnenrohrbereich 19' unter Unterdruck gesetzt, wodurch im Brunnenrohr der Grundwasserspiegel 16' auf ein Niveau 16a angehoben ist. Über einen zentralen Kanal 32 gelangt Luft in einen Düsenkörper 33, der auf seiner Oberseite als Düsenplatte ausgebildet ist. Die zugeführte Luft steigt aus dem Düsenkörper 33 unter der Wirkung des Unterdrucks durch das in den oberen Brunnenrohrbereich 19' hochgeförderte Grundwasser hindurch bis zum Flüssigkeitsspiegel 16a in Luftbläschen hoch, durch welche leichtflüchtige Verunreinigungen aus dem Grundwasser ausgeschieden werden. Die Grundwasserbewegung in dem luftdurchströmten Reinigungsbereich wird durch Leitwandungen bestimmt und ist in Fig. 2 durch Pfeile angedeutet. Eine intensive Grundwasserumwälzung in dem Reinigungsbereich wird durch eine Pumpe 34 unterstützt.

Zwischen dem oberen durchlässigen Wandungsabschnitt 10.1' und dem unteren durchlässigen Wandungsabschnitt 10.2' ist der zwischen dem Brunnenrohr 10' und der Wandung des Schachtes 30 bestehende Zwischenraum beispielsweise durch eine Tonfüllung 35 abgedichtet. Vor den durchlässigen Wandungsabschnitten 10.1' und 10.2' ist der Zwischenraum mit flüssigkeitsdurchlässigem Filterkies 36 ausgefüllt. In dem unteren Brunnenrohrbereich 18' ist höhenverstellbar ein Phasenseparator 37 angeordnet, der zum Abscheiden von Schweröl aus dem durchlaufenden Grundwasser dient. Am Boden des Schachtes 30 ist eine Sammelkammer 38 für Schweröl ausgebildet. Aus dieser Sammelkammer 38 führt eine Ölförderleitung 39 nach oben und außen.

Wie bei dem Ausführungsbeispiel nach Fig. 1 wird mittels der Förderpumpe 14' ein über das Brunnenrohr 10' führender Grundwasserkreislauf erzeugt, bei welchem das Grundwasser durch den unteren durchlässigen Wandungsabschnitt 10.2' in das Brunnenrohr einströmt und über den oberen durchlässigen Wandungsabschnitt 10.1' wieder in das Erdreich zurückfließt. Auch hier sind nicht dargestellte Hilfsschächte vorhanden, welche Flüssigkeits-Hilfskreisläufe erzeugen, durch welche abgelagertes Schweröl 40 verstärkt dem Grundwasserkreislauf beigemischt und in den unteren Brunnenrohrbereich 18' eingesaugt wird. Dort wird das Schweröl 40 in dem Phasenseparator 37 aus dem Grundwasser abgeschieden und sammelt sich in der unteren Sammelkammer 38, aus welcher es über die Förderleitung 39 entnommen werden kann.

## Patentansprüche

1. Verfahren zur Beeinflussung von im Erdreich befindlichen Flüssigkeiten durch Bildung eines Flüssigkeitskreislaufes in dem Erdreich mittels einer Pumpe (14, 14'), die in einem in dem Erdreich (11, 11') bis in den interessierenden Flüssigkeitsbereich eingebrachten Schacht (10, 30) in einem Verbindungskanal (13, 13') zwischen zwei voneinander getrennten, jeweils flüssigkeitsdurchlässige Wandungen (10.1, 10.2; 10.1', 10.2') aufweisenden Schachtabschnitten (18, 19; 18', 19') angeordnet ist, dadurch gekennzeichnet, daß mittels im Flüssigkeitseinzugsbereich des Schachtes (10; 30) niedergebrachter, ebenfalls eine Flüssigkeitsantriebsvorrichtung aufweisender Hilfsbohrschächte (22) Flüssigkeits-Hilfskreisläufe (27) zur Vermischung von Flüssigkeitsphasen unterschiedlicher spezifischer Gewichte geschaffen werden.

2. Verfahren nach Anspruch 1, dadurch gekennzeichnet, daß mittels der Flüssigkeitsantriebsvorrichtungen (24/26) in den Hilfsbohrschächten (22) Antriebsimpulse mit an die Durchlässigkeit des Erdreiches (11) angepaßter Impulsfrequenz auf die Flüssigkeit ausgeübt werden.

3. Einrichtung zur Durchführung des Verfahrens nach Anspruch 1 oder 2, mit einem in das Erdreich (11) bis in den interessierenden Flüssigkeitsbereich eingebrachten Schacht (10; 30) mit zwei voneinander durch eine Wandung (12; 12') getrennten Schachtbereichen (18, 19; 18', 19'), deren durchlässige Wandungsabschnitte (10.1, 10.2; 10.1', 10.2') in Achsrichtung des Schachtes voneinander entfernt sind, und mit einem Verbindungskanal (13; 13'), in welchem eine Förderpumpe (14; 14') angeordnet ist, sowie mit dem Schacht (10; 30) benachbarten Hilfsbohrschächten (22), dadurch gekennzeichnet, daß die Hilfshohrschächte (22) ebenfalls in ihrer Achsrichtung voneinander entfernte durchlässige Wandungsbereiche (22.1, 22.2) aufweisen, zwischen denen jeweils im Hilfsschacht (22) eine in einer Achsrichtung des Hilfsschachtes wirksame Flüssigkeits-Antriebsvorrichtung angeordnet ist.

4. Einrichtung nach Anspruch 3, dadurch gekennzeichnet, daß die Flüssigkeitsantriebsvorrichtung eine Impulsantriebsvorrichtung (24) ist.

5. Einrichtung nach Anspruch 3 oder 4, dadurch gekennzeichnet, daß der Hilfsschacht (22) als Hubzylinder für einen zwischen den durchlässigen Wandungsbereichen (22.1, 22.2) angeordneten Stoßkolben (24) ausgebildet ist und eine Einrichtung (28) zur Einstellung der Stoßfrequenz des Stoßkolbens (24) vorgesehen ist.

6. Einrichtung nach einem der Ansprüche 3 bis 5, dadurch gekennzeichnet, daß die Förderrichtung der in den Hilfsschächten (22) angeordneten Flüssigkeitsantriebsvorrichtungen (24) nach unten gerichtet ist, um einen Flüssigkeitskreislauf zu erzeugen, der im Erdreich (11) von unten nach oben in den Hilfsschacht (22) zurückführt.

7. Einrichtung nach einem der Ansprüche 3 bis 6, dadurch gekennzeichnet, daß eine in dem Schacht (30) angeordnete Reinigungseinrichtung in bekannter Weise eine Unterdruck-Gasbehandlungseinrichtung und/oder eine Filtereinrichtung ist. (Fig. 2)

8. Einrichtung nach einem der Ansprüche 3 bis 7, dadurch gekennzeichnet, daß am Boden des Schachtes (30) eine Sammelkammer (38) für schwere Flüssigkeitsphasen ausgebildet ist. (Fig. 2)
